# EUROPEAN PATENT APPLICATION

(11) **EP 3 352 450 A1**
(43) Date of publication of application: **25.07.2018**
(21) Application number: 17152135.4
(22) Date of filing: 19.01.2017
(51) Int. Cl.: H04N 5/232, H04N 5/92

(54) **VEHICLE IMAGE RECORDING APPARATUS AND METHOD OF RECORDING IMAGE DATA OF AN ENVIRONMENT PROXIMATE TO A VEHICLE**

(71) Applicant: Alpine Electronics, Inc., Tokyo (JP)
(72) Inventor: Loebbert, Johannes, 70567 Stuttgart (DE)
(74) Representative: Schmitt-Nilson Schraud Waibel Wohlfrom Patentanwälte Partnerschaft mbB

(57) **Abstract**

A vehicle image recording apparatus (10) comprises an omnidirectional vehicle camera (11) with an approximately 360-degree field of view at least in the horizontal plane, wherein the omnidirectional vehicle camera (11) is configured and arranged to capture at least one sequence of images (30) of an environment (4) proximate to the vehicle (1) during movement of the vehicle, a tracking device (12) configured to track at least a part of a human's head (22) residing in the vehicle (1) indicative of a line of vision (23) and to retrieve tracking data associated with the tracking of the at least one part of the human's head (22), and a recording device (13) operatively coupled with the omnidirectional camera (11) for recording image data (31) associated with the at least one sequence of images (30), wherein the recording device (13) is configured to synchronize the recording of the image data (31) associated with the at least one sequence of images (30) with the tracking data associated with the tracking of the at least part of the human's head (22).

## Description

The present disclosure relates to a vehicle image recording apparatus and a method of recording image data associated with a sequence of images of an environment proximate to a vehicle.

In some applications, it is common that drivers place a camera on or inside a vehicle to record their driving route or to record other videos of a trip when driving with their vehicle. One possibility for placing a camera with respect to a vehicle is mounting it outside or inside the vehicle, e.g. on a surface of the vehicle, such as the roof of a car, or in proximity of the front windshield. Some vehicle cameras are fixedly installed in cars and record only what is, e.g., in front of the car. To overcome this limited view area, newer types of cameras have special lenses to record a 360° area around the camera. As a result the whole area around the car is recorded. On the other hand, such types of camera generate a large amount of image data due to the broad coverage of their field of view which affords a high memory capacity for storing the image data.

JP 2007-072567 A discloses an image recognition device which determines a visual line direction of the driver from an image of the driver's eyes taken by a driver face monitoring camera. A control circuit of a car navigation device periodically records, in a memory, traveling data detected by a vehicle speed sensor or the like, position data acquired by a position detector, peripheral image data taken by a peripheral state monitoring camera, and the visual line direction data with the time. A vehicle traveling information recording device is thus provided in which, in the event of a vehicle accident or the like, it can be known in further detail how a driver was driving.

It is an object of the present invention to provide a vehicle image recording apparatus and a method of recording image data associated with a sequence of images of an environment proximate to a vehicle which are capable to provide a wide field of view while at the same time providing a possibility to use only a limited memory capacity for storing the image data.

The invention relates to a vehicle image recording apparatus and a method of recording image data associated with a sequence of images of an environment proximate to a vehicle according to the independent claims. Embodiments thereof are disclosed in the dependent claims.

According to an aspect, there is disclosed a method of recording image data associated with a sequence of images of an environment proximate to a vehicle comprising the steps of receiving at least one sequence of images of the environment captured with an omnidirectional vehicle camera with an approximately 360-degree field of view at least in the horizontal plane during movement of the vehicle, tracking at least a part of a human's head residing in the vehicle indicative of a line of vision with a tracking device, recording image data associated with the at least one sequence of images and retrieving tracking data associated with the tracking of the at least one part of the human's head, and synchronizing the recording of the image data associated with the at least one sequence of images with the tracking data.

According to another aspect, there is disclosed a vehicle image recording apparatus, comprising an omnidirectional vehicle camera with an approximately 360-degree field of view at least in the horizontal plane, wherein the omnidirectional vehicle camera is configured and arranged to capture at least one sequence of images of an environment proximate to the vehicle during movement of the vehicle, a tracking device configured to track at least a part of a human's head residing in the vehicle indicative of the human's line of vision and to retrieve tracking data associated with the tracking of the at least one part of the human's head, and a recording device operatively coupled with the omnidirectional camera for recording image data associated with the at least one sequence of images, wherein the recording device is configured to synchronize the recording of the image data associated with the at least one sequence of images with the tracking data associated with the tracking of the at least part of the human's head.

According to an embodiment, the omnidirectional vehicle camera is mounted at a roof of the vehicle.

According to a further embodiment, the tracking device comprises an in-vehicle camera for tracking at least one viewing direction of the human's head. In particular, the in-vehicle camera is configured to track at least one of an eye position and eye movement of the human's head.

According to an embodiment, the recording device is configured to extract image data from the at least one sequence of images which cover a respective range within the images around a line of vision of the human's head, and the vehicle image recording apparatus further comprises a storing device for storing the extracted image data.

The invention combines a new type of camera with a tracking device configured to track at least a part of a human's head of a user residing in the vehicle in a manner that the vehicle image recording apparatus may later on allow the user to review the sequence of images and viewpoint which he/she monitored while recording of the image data was done. Advantageously, the user may later on recover image data recorded at a specific time, for example, recorded at a time when there was an interesting event or building. Thus, after finishing recording the user can check what he actually saw and also, if appropriate and desired, review the surrounding environment recorded at the same time.

According to an embodiment, tracking at least a part of the human's head comprises tracking at least one viewing direction of the human's head. In particular, tracking at least a part of the human's head comprises tracking at least one of an eye position and eye movement of the human's head.

According to an embodiment, synchronizing the recording of the image data associated with the at least one sequence of images with the tracking data includes extracting image data from the at least one sequence of images which cover a respective range within the images around a line of vision of the human's head. In this way, this provides an efficient way of storing only image data the user is interested in, while at the same time providing the possibility to gain images of the whole environment around the user with the 360-degree camera in the sequence of images.

According to an embodiment, the extracted image data are stored on a storing device, for example located on the vehicle.

In particular, with receiving at least one sequence of images of the environment captured with the omnidirectional vehicle camera, at least one sequence of 360 degree images of the environment is received providing the possibility to cover the whole environment around the user.

According to an embodiment, the method further comprises the step of recording at least one marker within the sequence of images set by a user's instruction. This allows the user to later check only the most interesting sequences of images marked by a corresponding marker. For example, a marker may be set acoustically or by use of a human machine interface, such as a graphical user interface, e.g. by using an input key or a touch screen.

According to an embodiment, the invention further comprises reproducing at least part of the image data associated with the at least one sequence of images, wherein during the reproduction a viewpoint within the image data is adjusted in accordance with the tracking data. Thus, the user can view the recorded image data in accordance with his or her line of vision during the recording of the images.

According to another aspect, there is provided a computer program product comprising software code sections which are configured to perform a method according to the invention as described herein. In particular, such computer program may be implemented in principle in any processing device on the vehicle or in the camera which is appropriate to perform the respective function. Such processing device may be, for example, implemented in, or part of, a processor of an ECU of the vehicle or of the camera, or may be a separate component (e.g. coupled to the CAN-Bus of the vehicle), or may be a distributed system using one or more processors and/or integrated circuits. The computer program may be stored on a computer readable medium.

For example, each one of the tracking device and recording device may be, at least partially, implemented in hardware and/or in software. Each one or both may be, for example, implemented in, or part of, an ECU of the vehicle or the camera, or may be a separate component (in hardware and/or software), or may be a distributed system (in hardware and/or software) using one or more processors and/or integrated circuits.

Exemplary embodiments of the invention are described in greater detail below with reference to the enclosed Figures.
- Fig. 1: is a schematic view of a vehicle including a vehicle image recording apparatus according to an embodiment of the invention,
- Fig. 2: is a schematic top view of a vehicle image recording apparatus according to an embodiment of the invention,
- Fig. 3: is a schematic diagram of an image frame captured by an omnidirectional vehicle camera with an approximately 360-degree field of view with synchronized recording of image data according to an embodiment of the invention.

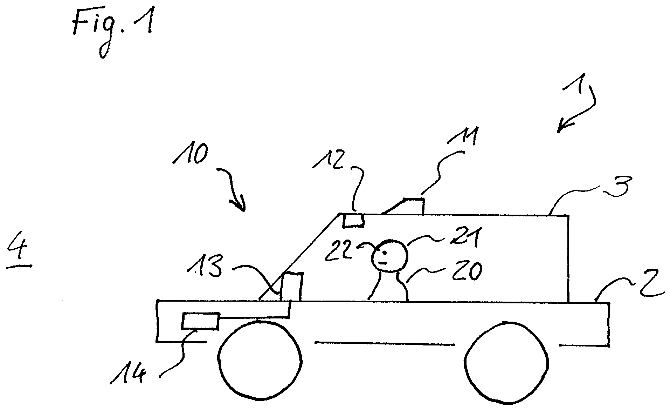

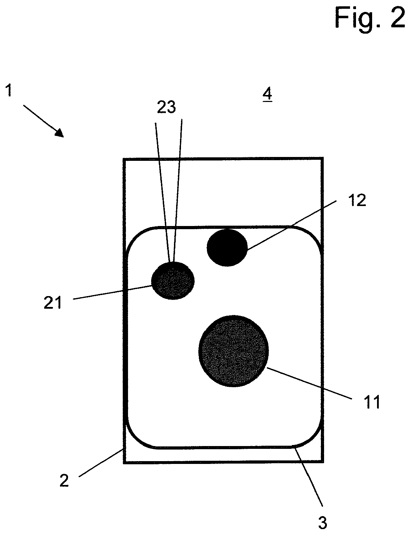

Fig.1 in combination with Fig. 2 shows a schematic view of a vehicle including a vehicle image recording apparatus according to an embodiment of the invention. The vehicle 1 comprises a vehicle chassis and a roof 3 as is known with common vehicles, such as commonly known cars. A human person 20, such as a driver or passenger travelling in the vehicle, is located in the vehicle 1 and may be captured by a tracking device 12 of a vehicle image recording apparatus 10.

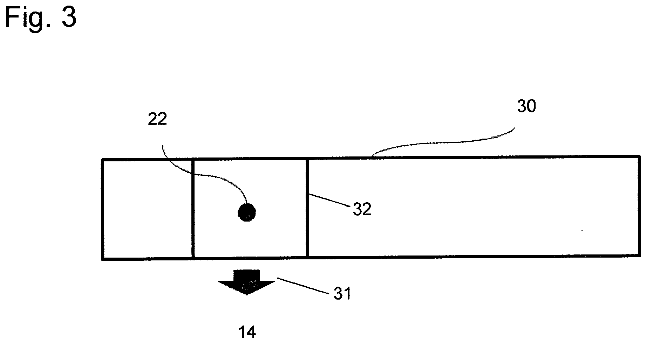

The vehicle image recording apparatus 10 comprises an omnidirectional vehicle camera 11. The omnidirectional vehicle camera 11 has an approximately 360-degree field of view at least in the horizontal plane. In particular, the omnidirectional vehicle camera 11 has a 360-degree field of view, wherein "approximately 360 degree" shall mean that the beginning and end of an image frame (the side edges of an image, see e.g. image 30 according to Fig. 3) may not exactly coincide according to a full/exact 360 degrees, but may deviate a few degrees depending on the particular camera settings and circumstances. In the following, the term "360 degree image" shall be understood in this way as an image having a 360-degree field of view at least in the horizontal plane which may have such deviations.

An ideal omnidirectional camera captures light from all directions falling onto the focal point, covering a full sphere. In practice, however, most omnidirectional cameras cover only almost the full sphere and many cameras which are referred to as omnidirectional cover only approximately a hemisphere, or 360 degrees along the equator of the sphere (horizontal plane) but excluding the top and bottom of the sphere. The omnidirectional camera according to the present invention shall encompass all these types of omnidirectional cameras.

The omnidirectional vehicle camera 11 is configured and arranged to capture at least one sequence of images (see Fig. 3 depicting one such image 30 according to an embodiment) of an environment 4 proximate to the vehicle 1 during movement of the vehicle. For example, the camera 11 is placed on the vehicle roof 3 (the camera 11 may also be at least partly integrated in the roof 3, for example as is common with commonly known vehicle antennas) to record the driving route (the environment 4 located in front of the vehcile 1) or to record other perspectives of a trip (e.g., any interesting buildings in the surrounding environment 4 of the vehicle 1 in front of or in the periphery of the vehicle 1) when driving with the vehicle. The camera may also be placed inside the vehicle, or at some other location in or on the vehicle. The sequence of images 30 captured by the camera 11 may form a continuous video stream, or may be individual images taken at different points of time during driving, or a combination of both.

Fig. 3 is a schematic diagram of an image 30 captured by omnidirectional vehicle camera 11 with an approximately 360-degree field of view. As is common with digital cameras, a captured image comprises image data which are included in a so-called image frame, one of such image frames of an image 30 is depicted in Fig. 3. In an ideal omnidirectional camera, the left and right side edges of the image frame coincide, i.e. depict the same line of vision according to a full/exact 360 degree field of view.

Referring again to Fig. 1, the vehicle image recording apparatus 10 further comprises a tracking device 12 which is configured to track at least a part of a human's head 21, in particular of the driver or passenger 20 residing in the vehicle 1. The part of the head 21 to be tracked should be indicative of a line of vision 23 (Fig. 2) of the driver or passenger 20. For example, the tracking device 12 is or comprises an in-vehicle camera for tracking at least one viewing direction of the driver or passenger 20. According to an embodiment, at least one of an eye position and eye movement of a driver's or passenger's eye 22 may be tracked. To this end, commonly known techniques for head tracking and/or eye tracking using such camera(s) may be employed.

For example, the in-vehicle camera of the tacking device 12 for tracking at least one viewing direction of the driver or passenger 20 is placed in front of the driver or passenger (e.g. in or at the rearview mirror at the windshield) and captures image data of the driver's or passenger's eye or eyes 22, e.g. in a sequence of images. From these images, tracking data may be retrieved which are indicative of a viewing direction of the driver or passenger 20. In general, the tracking data may encompass any data which are associated with the tracking of the at least one part of the human's head, e.g. the driver's or passenger's eye(s) 22. For example, the tracking data may include position data related to the tracked eye 22.

A recording device 13 is operatively coupled with the omnidirectional camera 11 for recording selected image data 31 associated with the at least one sequence of images 30. For example, the recording device 13 comprises one or more processors which receive the image data of the omnidirectional camera 11 and control recording thereof in a storing device 14, such as a non-volatile memory located in the vehicle, such as in the head unit or the electronic control unit (ECU) of the vehicle.

With recording only selected image data 31 of the sequence of images 30, the capacity of the storing device 14 can be advantageously reduced, while at the same time it is still possible to use the full field of view of the 360-degree omnidirectional camera 11. To this end, the recording device 13 synchronizes the recording of the selected image data 31 of the sequence of images 30 with the tracking data associated with the tracking of the driver's or passenger's eye(s) 22.

In particular, synchronizing the recording of the image data 31 of the sequence of images 30 with the tracking data includes extracting image data 31 from the sequence of images 30 which cover only a respective range 32 within the images 30 around the line of vision 23 (cf. Fig. 2) of the driver or passenger. Since selected image data 31 from the sequence of images 30 are recorded which only cover a respective range 32 within the images 30, preferably around the line of vision 23 of the driver or passenger, i.e. which only cover a respective range 32 smaller than the 360 degree field of view of the omnidirectional camera, the capacity of the storing device 14 can advantageously be dimensioned quite small.

Thus, according to aspects of the invention, a sequence of 360 degree images 30 is captured by the omnidirectional vehicle camera 11, wherein the tracking device 12 according to an embodiment detects an eyepoint of the driver or passenger by using an in-vehicle camera. For example, the eyepoint corresponds with a position of the pupil of the driver's or passenger's eye(s) 22. The recording device 12 extracts image data 31 around the detected eyepoint, wherein these image data 31 are recorded in the storing device 14. Advantageously, in this way, only image data are stored which the driver or passenger is interested in. The recording device does not need a large memory capacity, since only a part of the 360 degree images are stored.

The invention combines a 360 degree camera with a tracking device configured to track a driver's or passenger's viewing direction in a manner that the vehicle image recording apparatus may later on allow the user to review the sequence of images and viewpoint which he/she monitored while recording of the image data during driving. Advantageously, the user may later on recover image data recorded at a specific time, for example, recorded at a time when there was an interesting event or building. Thus, after finishing recording the user can check what he actually saw and also, if appropriate and desired, review the surrounding environment recorded at the same time. The surrounding environment can be selected, for example, according to a set width of the range 32 with an image 30.

After recording of the image data, e.g. when the trip has terminated, the driver or passenger can reproduce at least part of the recorded image data 31. Advantageously, during the reproduction a viewpoint within the image data 31 can be adjusted in accordance with the tracking data of the tracking device 12, e.g. in accordance with the tracked eyepoint of the driver or passenger.

During recoding of the sequence of images 30, at least one marker may be recorded within the sequence of images, with the marker set by a user's instruction, e.g. by voice control. This allows the user to later check only the most interesting sequences of images marked by a corresponding marker. For example, such marker may also be set through a human machine interface, such as a graphical user interface.

## Claims

1. A method of recording image data associated with a sequence of images of an environment proximate to a vehicle comprising the steps of:
- receiving at least one sequence of images (30) of the environment (4) captured with an omnidirectional vehicle camera (11) with an approximately 360-degree field of view at least in the horizontal plane during movement of the vehicle (1),
- tracking at least a part of a human's head (22) residing in the vehicle (1) indicative of a line of vision (23) with a tracking device (12),
- recording image data (31) associated with the at least one sequence of images (30) and retrieving tracking data associated with the tracking of the at least one part of the human's head (22), and
- synchronizing the recording of the image data (31) associated with the at least one sequence of images (30) with the tracking data.

2. The method according to claim 1, wherein the step of tracking at least a part of the human's head comprises tracking at least one viewing direction of the human's head (21).

3. The method according to claim 1 or 2, wherein the step of tracking at least a part of the human's head (22) comprises tracking at least one of an eye position and eye movement of the human's head (21).

4. The method according to one of claims 1 to 3, wherein synchronizing the recording of the image data (31) associated with the at least one sequence of images (30) with the tracking data includes extracting image data (31) from the at least one sequence of images (30) which cover a respective range (32) within the images (30) around a line of vision (23) of the human's head (21).

5. The method according to claim 4, further including the step of storing the extracted image data (31) on a storing device (14).

6. The method according to one of claims 1 to 5, comprising receiving at least one sequence of 360 degree images (30) of the environment (4).

7. The method according to one of claims 1 to 6, further comprising the step of recording at least one marker within the sequence of images set by a user's instruction.

8. The method according to one of claims 1 to 7, further comprising reproducing at least part of the image data (31) associated with the at least one sequence of images (30), wherein during the reproduction a viewpoint within the image data (31) is adjusted in accordance with the tracking data.

9. A computer program product comprising software code sections which are configured to perform a method according to one of claims 1 to 8.

10. Vehicle image recording apparatus (10), comprising
- an omnidirectional vehicle camera (11) with an approximately 360-degree field of view at least in the horizontal plane, wherein the omnidirectional vehicle camera (11) is configured and arranged to capture at least one sequence of images (30) of an environment (4) proximate to the vehicle (1) during movement of the vehicle,
- a tracking device (12) configured to track at least a part of a human's head (22) residing in the vehicle (1) indicative of a line of vision (23) and to retrieve tracking data associated with the tracking of the at least one part of the human's head (22),
- a recording device (13) operatively coupled with the omnidirectional camera (11) for recording image data (31) associated with the at least one sequence of images (30), wherein the recording device (13) is configured to synchronize the recording of the image data (31) associated with the at least one sequence of images (30) with the tracking data associated with the tracking of the at least part of the human's head (22).

11. Vehicle image recording apparatus according to claim 10, wherein the omnidirectional vehicle camera (11) is mounted at a roof (3) of the vehicle.

12. Vehicle image recording apparatus according to claim 10 or 11, wherein the tracking device (12) comprises an in-vehicle camera for tracking at least one viewing direction of the human's head (21).

13. Vehicle image recording apparatus according to claim 12, wherein the in-vehicle camera is configured for tracking at least one of an eye position and eye movement of the human's head (21).

14. Vehicle image recording apparatus according to one of claims 10 to 13, wherein the recording device (13) is configured to extract image data (31) from the at least one sequence of images (30) which cover a respective range (32) within the images (30) around a line of vision (23) of the human's head (21), and the vehicle image recording apparatus further comprises a storing device (14) for storing the extracted image data (31).
